(19) **Europäisches Patentamt**

**European Patent Office**

**Office européen des brevets**

(11) Veröffentlichungsnummer: **0 326 814**
**A1**

## (12) EUROPÄISCHE PATENTANMELDUNG

(21) Anmeldenummer: **89100310.5**

(22) Anmeldetag: **10.01.89**

(30) Priorität: **01.02.88 CS 590/88**
**01.02.88 CS 591/88**

(43) Veröffentlichungstag der Anmeldung:
**09.08.89 Patentblatt 89/32**

(84) Benannte Vertragsstaaten:
**AT BE DE FR GB IT LU NL SE**

(51) Int. Cl.⁴: **F24H 9/00**

(71) Anmelder: **Jednotné zemedelské druzstvo "Chovatei"**

**468 71 Lucany nad Nisou(CS)**

(72) Erfinder: **Cafourek, Vladimir**
**Vratislavova 28**
**Praha 2(CS)**
Erfinder: **Cech, Jici**
**Mimonská 634**
**Praha 9(CS)**
Erfinder: **Herman, Lev, Dipl.-Ing.**
**Kounická 74**
**Praha 10(CS)**
Erfinder: **Paulas, Viktor**
**Boretická 1**
**Brno(CS)**

(74) Vertreter: **Patentanwälte Beetz sen. - Beetz jun. Timpe - Siegfried - Schmitt-Fumian-Mayr**
**Steinsdorfstrasse 10**
**D-8000 München 22(DE)**

(54) **Strahlungskessel zur Erwärmung von Flüssigkeiten.**

㊼ Strahlungskessel zur Erwärmung von Flüssigkeiten durch Verbrennung eines Gas-Luftgemisches, teilweise im freien Raum des Kessels (23) und teilweise durch nicht-katalytische flammenlose Oberflächenverbrennung an einer Vielzahl von keramischen Körpern einer aktiven Füllung, die in mindestens zwei Schichten (5, 6) unterteilt ist. Die obere Schicht (5) enthält die zur flammenlosen Verbrennung des Gasgemisches bestimmten keramischen Körper, während die untere Schicht (6) durch eine Vielzahl von Körpern eines Materials von hoher Wärmeleitfähigkeit gebildet ist. Der Kessel enthält einen inneren Flüssigkeitsraum (1), umgeben von einem die mehrschichtige Füllung aufnehmenden Arbeitsraum (3), der wiederum von einem äusseren Flüssigkeitsraum (7) umgeben ist.

FIG.1

Xerox Copy Centre

## Strahlungskessel zur Erwärmung von Flüssigkeiten.

Die vorliegende Erfindung bezieht sich auf einen Strahlungskessel zur Erwärmung von Flüssigkeiten durch Verbrennung eines homogenisierten Gas-Luftgemisches, teilweise in einem freien Raum des Kessels und teilweise durch nichtkatalytische flammenlose Oberflächenverbrennung an einer Vielzahl von keramischen Körpern einer im Arbeitsraum des Strahlungskessels gelagerten aktiven Füllung zur Umwandlung der Wärmeenergie des brennenden Gasgemisches in Wärmestrahlungsenergie, wobei das homogenisierte Brenngemisch von oben in den Kessel durch einen Gemischverteiler zugeführt wird.

Kessel dieser Art sind bereits bekannt und im Hinblick darauf, dass der Grossteil der freigesetzten Wärmeenergie im Oberteil der keramischen aktiven Füllung durch Strahlung an Wärmetauschflächen übergeben wird, werden diese Kessel als Strahlungskessel bezeichnet.

Diese Strahlungskessel weisen zwar einen hohen Wirkungsgrad auf, nützen jedoch nicht die latente Wärme /Aggregatwärme/ des in den Brenngasen enthaltenen Wasserdampfes aus. Falls auch diese latente Wärme ausgenützt wird, wäre der Wirkungsgrad der Kessel noch höher. Theoretisch wäre es zwar möglich durch eine bedeutende Vergrösserung der Höhe /bzw. Länge/ der aktiven Füllung die Temperatur der entweichenden Brenngase noch weiter herabzusetzen und dadurch die Kondensierung des Wasserdampfes zu erreichen, aber in der Praxis würde diese Lösung auf zahlreiche Schwierigkeiten stossen. Durch eine Vergrösserung der Höhe der aktiven keramischen Füllung würde ihr Gewicht ansteigen, aber hauptsächlich würde der Widerstand gegen die Gasströmung übermässig ansteigen, was eine grosse Erhöhung der Gebläseleistung und des Leistungsbedarfs des Motors erfordern würde, sodass die energetische Endbilanz passiv wäre. Bisher ist es nicht gelungen, die Kondensierung des Wasserdampfes direkt im Strahlungskessel selbst, ohne zusätzliche Wärmetauschflächen zu erreichen und insofern es beabsichtigt war die latente Wärme auszunützen, musste eine besondere Einrichtung entweder im Kessel oder ausserhalb des Kessels verwendet werden.

Bei bekannten Strahlungskesseln besteht die aktive Füllung in ihrer ganzen Höhe aus keramischem Material, das entweder homogen ist oder in der oberen Zone aus einem hochwertigen Werkstoff und in der unteren Zone aus einem minderwertigen keramischen Werkstoff, z.B. Schamott, besteht. Im oberen Teil der keramischen Füllung entsteht eine sehr hohe Temperatur und dort wird auch der grösste Teil der freigesetzten Wärmeenergie abgestrahlt, worauf in Abwärtsrichtung die Gase abgekühlt werden, doch sinkt die Intensität der Wärmeübertragung aus der keramischen Füllung an die Wärmetauschflächen rasch ab. Dies ist wahrscheinlich in beträchtlichem Masse dadurch verursacht, dass das keramische Material im unteren Teil der Füllung gewissermassen einen Wärmespeicher bildet, der das Absinken der Temperatur an dieser Stelle nicht gestattet.

Die bekannten Strahlungskessel weisen noch weitere Nachteile auf. Der schwerwiegendste unter ihnen ist die übermässige Wärmebelastung der Keramik durch Überhitzung infolge einer ungenügenden Kühlung. Die Temperatur in der Glutzone der aktiven Füllung erreicht 1600 bis 1700°C, sodass die keramischen Körper zusammensintern, wodurch die zwischen ihnen befindlichen von Brenngasen durchströmten Kanäle zerstört werden und der Widerstand gegen die Gasströmung steigt, was eine Erhöhung des Gebläsedruckes und des Leistungsbedarfs des Motors erfordert. Dieser Umstand wird noch weiter durch die Konstruktion des Kessels verschlechtert, bei welcher zwischen den Wärmetauschflächen /Rohren/ verhältnismässig grosse Zwischenräume vorhanden sind, in den allzuviele keramische Körper gehäuft sind, die die Wärme an die Wärmetauschflächen nicht abstrahlen können sondern sie an die Nachbarkörper abstrahlen, deren Temperatur dann übermässig ansteigt, unter Bildung von glühenden Kernen, was alles einen ungünstigen Einfluss auf das keramische Material ausübt, das verhältnismässig bald zerstört wird.

Das gasförmige Brenngemisch wird bei den bekannten Strahlungskesseln durch einen unmittelbar über dem oberen Niveau der aktiven Füllung angebrachten Verteiler oder Brenner zugeführt, sodass der Verteiler unmittelbar der Glut aus dem glühenden Kern ausgesetzt ist, was einen weiteren Nachteil darstellt.

Die gesamte Querschnittfläche der keramischen Füllung ist bei bekannten Kesseln verhältnismässig klein, sodass die Keramik einen bedeutenden Widerstand gegen die Gasströmung leistet. Die Konstruktion der bisherigen Strahlungskessel gestattet keine Regelung der Höchsttemperaturen in der aktiven Füllung, die einen allzu hohen Wert erreichen.

De obangeführten Nachteile beseitigt in einem bedeutendem Masse der erfindungsmässige Kessel.

Das Wesen der Erfindung beruht darin, dass die im Arbeitsraum des Strahlungskessels untergebrachte aktive Füllung in mindestens zwei Schichten unterteilt ist, von denen die zur flammenlosen Verbrennung des Brenngemisches bestimmte Vielzahl von keramischen Körpern nur in der oberen Schicht enthalten ist, während die untere Schicht durch eine Vielzahl von Körpern eines Materials von hoher Wärmeleitfähigkeit, insbesondere Metallkörper gebildet wird.

Die Erfindung bezieht sich auch auf eine zur Verwendung der besagten mehrschichtigen aktiven Füllung besonders vorteilhafte Ausbildung des Kessels selbst.

Gemäss einem weiteren Merkmal der Erfindung enthäl der Kessel einen inneren achsialen Flüssigkeitsraum für die zu erwärmende Flüssigkeit, der von einem durch parallele Wände begrenzten Arbeitsraum umgeben ist, der die mehrschichtige aktive Füllung enthält, zwischen welcher und dem Gemischverteiler sich ein leerer Raum für das freie Brennen des Brenngemisches vor seinem Eintritt in den Oberteil der mehrschichtigen aktiven Füllung befindet und dieser Arbeitsraum ist von einem äusseren Flüssigkeitsraum für die zu erwärmende Flüssigkeit umgeben, wobei beide Flüssigkeitsräume zueinander parallel geschaltet sind.

Durch die erfindungsmässige Gestaltung des Kessels wird erreicht, dass die Intensität der Wärmeübertragung nicht nur in der oberen keramischen Schicht hoch ist, da hier die Wärme überwiegend durch Strahlung übergeben wird, sondern es ist wichtig, das in der unteren durch Metallkörper gebildeten Schicht die Wärmeübetragung von der aktiven Füllung an die Wärmetauschflächen sehr stark erhöht wird, sodass die Brenngase beim Durchtritt durch die untere Schicht so rasch abgekühlt werden, dass ihre Temperatur bis unter den Taupunkt herabsinkt. Infolgedessen kommt es zur Kondensierung der in den Brenngasen enthaltenen Wasserdämpfe und Freisetzung der latenten Wärme /Aggregatwärme/, die gleichfalls an die Wärmetauschflächen abgegeben wird. Diese Wirkung der mehrschichtigen aktiven Füllung ist unerwartet und überraschend. Nicht nur dass der Wirkungsgrad des Kessels bedeutend erhöht wird, sondern ein normaler Strahlungskessel wird in einen Kondensationskessel umgewandelt, ohnedass die Ausbildung des Kessels die geringste Änderung erfordert /mit Ausnahme der Anordnung eines Sammlers und Austrittsrohres für das kondensierte Wasser/. Dies alles erfolgt in der aktiven Füllung und im Kessel von normaler Höhe, die nicht vergrössert zu werden braucht und ferner ist es nicht erforderlich zur Ausnützung der latenten Wärme irgendwelche weitere Wärmetauschflächen hinzuzufügen.

Ein weiterer grosser Vorteil der Erfindung beruht darin, dass der Durchgang der Gase durch eine derart ausgestaltete aktive Füllung keine Druckerhöhung d.h. Erhöhung des Leistungsbedarfs des Motors erfordert, sodass die energetische Gesamtbilanz hoch aktiv ist. Dies wurde durch Messungen bestätigt, die einen ausserordentlich hohen Wirkungsgrad des Kessels ergaben, der den Wirkungsgrad der bekannten Kessel bei unveränderter Leistung des Gebläses und Motors bei weitem übertrifft.

Als Werkstoff von hoher Wärmeleitfähigkeit für die untere Schicht kann jedwelches Metale verwendet werden; sehr wohl hat sich Aluminium bewährt, weil seine Wärmeleitfähigkeit hoch ist und es gegen Korrosion durch das kondensierte Wasser widerstandsfähig ist. Dieses Material kann die Gestalt von beliebig geformten Körpern, z.B. Kugeln, Rollen u.dgl. haben.

Die besondere Ausgestaltung des Kessels selbst weist zahlreiche Vorteil auf. Die aktive Füllung ist in dem durch parallele Wände begrenzten Arbeitsraum gleichmässig verteilt, sodass die Körper der Füllung nirgends gehäuft sind, wodurch eine stellenweise Überhitzung ausgeschlossen wird. Eine Anhäufung von nicht gekühlter Keramik, die in bekannten Kesseln vorkommt, und eine übermässig hohe Temperatur der aktiven Füllung hervor, ruft, ist daher beseitigt. Die aktive Füllung wird von beiden Seiten und somit viel wirksamer als bei bekannten Kesseln gekühlt. Ein glühender Kern, der zum Sintern der Füllung führt, kann nicht entstehen, sodass die grösste bei den bekannten Kesseln entstehende Schwierigkeit beseitigt ist.

In einer vorzugsweisen Ausführung weist der Kessel einen kreisförmigen Querschnitt auf, sodass der innere Flüsigkeitsraum zylindrisch ist und der Arbeitsraum sowie der äussere Flüssigkeitsraum einen ringförmigen Querschnitt aufweisen. Es kann jedoch auch eine andere Querschnittform z.B. rechteckig, quadratisch oder dgl. verwendet werden, wobei dann die Querschnittform der einzelnen Räume entsprechend angepasst wird.

Bei dem erfindungsmässigen Kessel ist es von Vorteil, dass die aktive Füllung an einer verhältnismässig grossen Fläche des Arbeitsraumes verteilt ist, sodass ein viel niedrigerer Gebläsedruck und dadurch ein Gebläse mit verhältnismässig geringer Leistung und Leistungsbedarf des Motors verwendet werden kann. Dazu trägt noch der Umstand bei, dass infolge niderigerer Maximaltemperaturen keine Sinterung der keramischen Körper stattfindet, sodass die Kanäle zwischen ihnen unbeschädigt bleiben und selbst nach einem langen Betrieb des Kessels steigt der Widerstand gegen die Gasströmung nicht an. Der ansteigende Widerstand bildet bei bekannten Kesseln einen schwerwiegenden Nachteil.

Im Vergleich mit bekannten Kesseln wird bei dem erfindungsmässigen Kessel die Menge der erforderlichen Keramik infolge einer besseren Raumausnützung verringert. Auch ist in dem neuen Kessel ein grösserer Wassergehalt vorhanden, sodass bei einem Stromausfall diese Wassermenge imstande ist, eine solche Wärmemenge zu absorbieren, die ein Kochen der Flüssigkeit verhindert. Deshalb ist es nicht erforderlich ein besonderes Sicherheitsgefäss zu installieren, aus welchem beim Stromausfall in den Kessel Flüssigkeit automatisch zugeführt wird, um den Kessel abzukühlen.

Ein weiterer Vorteil der Erfindung ist die Anordnung eines mit Schlitzen versehenen Brenners oder Verteilers, der das entzündete Ge-misch über die gesamte Peripherie des Arbeitsraumes verteilt. Nach der Entzündung steigt das Gemischvolumen bedeutend an, weshalb es vorteilhaft ist, dass die Keramik im Arbeitsraum auf einer verhältnismässig grossen Fläche verteilt ist, sodass das expandierende Brenngemisch die Möglichkeit einer freien Expansion entlang der ganzen Peripherie hat. Ein weiterer Vorteil ist die Lagerung des Verteilers gegenüber der oberen gekühlten Wand des inneren Flüssigkeitsraumes, sodass er im Schatten des gekühlten Einbaues liegt und nicht der unmittelbaren Glut der heissen Keramik ausgesetzt ist, wie dies bei den bisherigen Kesseln der Fall ist. Dadurch wird seine Lagerung vereinfacht und seine Dauerhaftigkeit erhöht.

Einige Ausführungsbeispiele des erfindungsmässigen Strahlungskessels sind in den beigeschlossenen Zeichnungen dargestellt.

Fig. 1 ist ein schematischer vertikaler Schnitt durch eine vorteilhafte Ausführung des Kessels,

Fig. 2 ist ein Schnitt nach der Linie A - A bezw. B-B aus Fig. 1,

Fig. 3 ist eine abgeänderte Ausführungsform des Arbeits-und Flüssigkeitsraumes des Kessels,

Fig. 4 ist eine weitere Ausführungsform,

Fig. 5 zeigt eine andere Gestaltung des Arbeits- und Flüssigkeitsraumes,

Fig. 6 veranschaulicht eine weitere Ausführung und

Fig. 7 zeigt im Querschnitt eine beispielsweise Ausführung des unteren Teiles des Strahlungskessels.

In dem Kessel ist ein innerer achsialer Flüssigkeitsraum 1 angeordnet, der durch eine innere Wand 2 begrenzt und von einem durch parallele Wände begrenzten Arbeitsraum 3 umgeben ist, d.h. an seiner Innenseite durch die innere Wand 2 und an seiner Aussenseite durch eine parallel verlaufende mittlere Wand 4. In dem Arbeitsraum 3 ist eine aktive Füllung gelagert, die in mindestens zwei Schichten unterteilt ist, nämlich in eine obere Schicht 5 und eine untere Schicht 6. Die obere Schicht 5 enthält eine Vielzahl von Körpern eines keramischen Materials, vorzugsweise in der Form von Kugeln, Rollen oder dgl., zum Hervorrufen einer flammenlosen Verbrennung, während die untere Schicht 6 ein Material von hoher Wärmeleitfähigkeit enthält, z.B. Körper aus Aluminium oder einem anderen korrosionsfesten Material, gleichfalls in der Form von Kugeln, Rollen oder dgl. Der Arbeitsraum 3 ist von einem äusseren Flüssigkeitsraum 7 umgeben, der durch eine äussere Wand 8 begrenzt ist, welch letztere von einem nicht dargestellten Isoliermantel umschlossen ist.

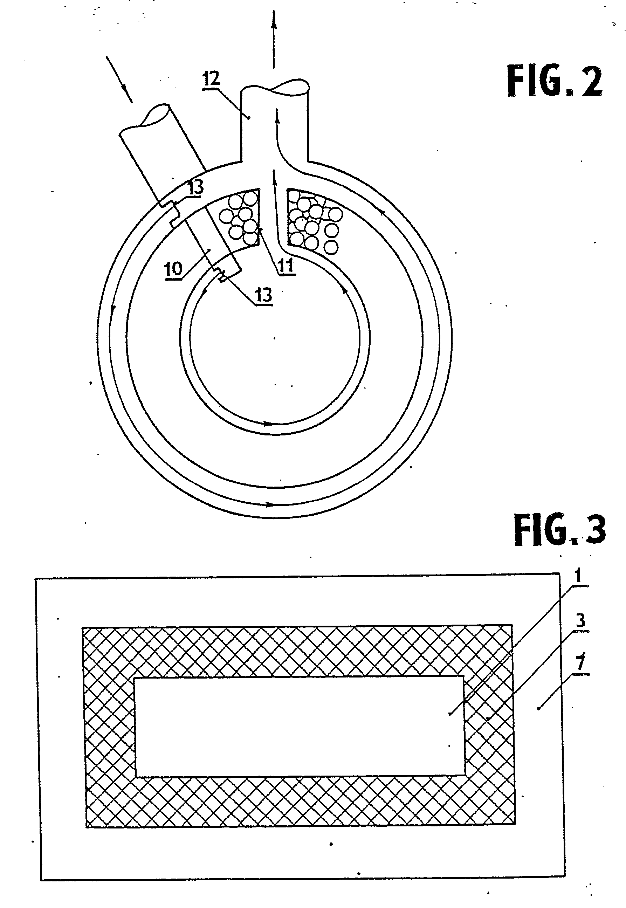

Die Flüssigkeit wird am unteren Ende des Kessels durch ein Zufuhrrohr 9 und einen Eintrittskanal 10 zugeführt, der in dem dargestellten Beispiel sowohl in den äusseren Flüssigkeitsraum 7 als auch in den inneren Flüssigkeitaraum 1 führt, die durch diesen Eintrittskanal 10 miteinander verbunden sind. Am oberen Ende des Kessels führt aus dem inneren Flüssigkeitsraum 1 ein Austrittskanal 11 in den äusseren Flüssigkeitsraum 7 und von hier fliesst die Flüssigkeit durch eine Austrittsleitung 12 aus. Zweckmässig erfolgt der Austritt aus dem Kanal 10 in die beiden Flüssigkeitsräume 1 und 7 durch tangential gerichtete Austrittsöffnungen 13, wie in Fig. 2 dargestellt ist, wodurch der Flüssigkeit in beiden Flüssigkeitsräumen 1 und 7 eine Rotationsbewegung erteilt wird. Der Eintrittskanal 10 bzw. seine Austrittsöffnungen 13 und der Austrittskanal 11 sind derart bemessen, dass am Austritt sowohl aus dem inneren Flüssigkeitsraum 1 als auch aus dem äusseren Flüssigkeitsraum 7 die Temperaturen der Flüssigkeit annähernd gleich sind.

Wie ersichtlich, sind die beiden Flüssigkeitsräume 1 und 7 parallel geschaltet, d.h. die Flüssigkeit fliesst in beiden Flüssigkeitsräumen von unten nach oben. In einer abgeänderten Ausführung kann jeder Flüssigkeitsraum 1 sowie 7 seinen eigenen Eintrittskanal und Austrittskanal haben, damit die Flüssigkeit getrennt /z.B. mit unterschiedlicher Temperatur/ aus jedem Flüssigkeitsraum entnommen werden kann.

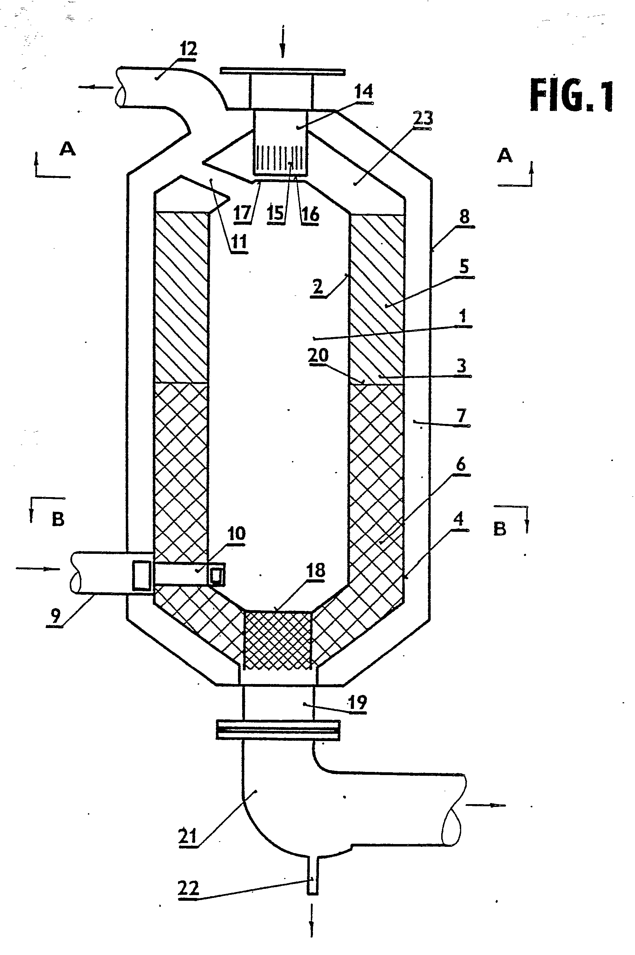

Das Brenngemisch wird von oben durch eine nicht gezeichnete Rohrleitung zugeführt und tritt in einen Verteiler 14 ein. Im dagestellten Beispiel ist der Verteiler 14 als ein in das Innere des Kessels ragender Körper ausgestaltet, der in seinem Seitenmantel ein System von Längsschlitzen 15 aufweist. Die Stirnwand 16 des Verteilers 14 ist voll ausgeführt. Wie aus Fig. 1 ersichtlich, liegt der Verteiler 14 gegenüber der oberen gekühlten Wand 17 des inneren Flüssigkeitsraumes 1, sodass er von unten gegen die direkte Glut geschützt ist.

Am unteren Ende ist der Arbeitsraum 3 mit einem Rost 18 verschlossen, an welchen der Austritt 19 der Brenngase angeschlossen ist.

In Fig. 2 sind der Eintrittskanal 10 und der Austrittskanal 11 in winkelversetzten Lagen dargestellt, doch ist es klar, dass sie in derselben senkrechten Ebene oder in einer anderen Weise gegeneinander versetzt sein können.

Das entzündete Brenngemisch tritt aus dem Verteiler 14 in den Arbeitsraum 3 ein, in dessen oberen leerem Raum 23 es frei brennen kann. Hierauf tritt das brennende Gemisch in die obere Schicht 5 der aktiven Füllung, in welcher es zur flammenlosen Verbrennung kommt und eine hohe Temperatur sich entwickelt. Hier wird der Grossteil der Wärmeenergie an Wärmetauschflächen 2, 4 abgestrahlt. Die Temperatur der keramischen Füllung sinkt in Abwärtsrichtung und im Bereich der Übergangs fläche 20, in der die obere Schicht 5 mit der unteren Schicht 6 in Berührung steht, sind die Gase schon soweit abgekühlt, dass sich bei ihrer weiteren Abwärtsströmung die Wärmeübertragung durch Strahlung an die Wärmetauschflächen 2,4 wenig wirksam gestalten würde. Von der Übergangsfläche 20 abwärts übernimmt deshalb die Aufgabe der Wärmeübergabe die durch Metallkörper gebildete untere Schicht 6. Wie bereits dargelegt, erfolgt in dieser Schicht eine intensive Wärmeübergabe an die Wärmetauschflächen 2,4 wodurch die Brenngase unter den Taupunkt abgekühlt werden und der in den Brenngasen enthaltene Wasserdampf kondensiert wird. Das kondensierte Wasser fliesst herab und wird durch einen Sammler 21 aus dem Strom der Brenngase abgeführt und fliesst durch eine Austrittsrohr 22 ab.

In einer weiteren Ausgestaltung der Erfindung kann zwischen die obere Schicht 5 und die untere Schicht 6 der aktiven Füllung mindestens eine Zwischenschicht aus einem Material von hoher Wärmewiderstandsfähigkeit und gleichzeitig hoher Wärmeleitfähigkeit z.B. Metallkeramik eingelegt werden, die - falls erwünscht - die gesamte untere Schicht 6 bilden kann.

Der erfindungsmässige Kessel ist besonders zum Erwärmen von Wasser für Zentralheizungen, für die Bereitung von warmem Nutzwasser sowie zum Erwärmen von anderen Flüssigkeiten bestimmt und im Hinblick auf sein verhältnismässig geringes Gewicht für Dachkesselräume geeignet. Die Erfindung kann jedoch auch bei Kesseln einer anderen Bauart verwendet werden z.B. bei solchen die im Kesselkörper eine zusammen hängende Schicht von Körpern besitzen, d.h. keinen inneren Flüssigkeitsraum enthalten oder bei Kesseln mit einem Rohrmantel, obschon mit einem Einbau oder ohne ihn.

Prüfungen haben ergeben, dass der erfindungsmässig Strahlungskessel einen weit höheren Wirkungsgrad als die bekannten vergleichbaren Strahlungskessel aufweist, was einerseits der Ausnützung der latenten Wärme, andererseits der in ihrer Gesamtheit zweckmässigeren Bauweise zuzuschreiben ist. Auch der erforderlich Leistungsbedarf an elektrischem Strom ist niedriger, da ein weniger leistungsfähiges Gebläse genügt. Es ist auch wichtig, dass der neue Kessel ein niedrigeres Gewicht hat und seine Herstellung weniger anspruchsvoll ist.

Der im Ausführungsbeispiel beschriebene Kessel, weist einen kreisförmigen Querschnitt auf, bei welchem der die mehrschichtige Füllung enthaltende Arbeitsraum einen ringförmigen Querschnitt besitzt. Obwohl diese Ausführungsform vorteilhaft ist, ist die Erfindung keineswegs auf diese Form beschränkt und es können auch andere Querschnittformen gewählt werden.

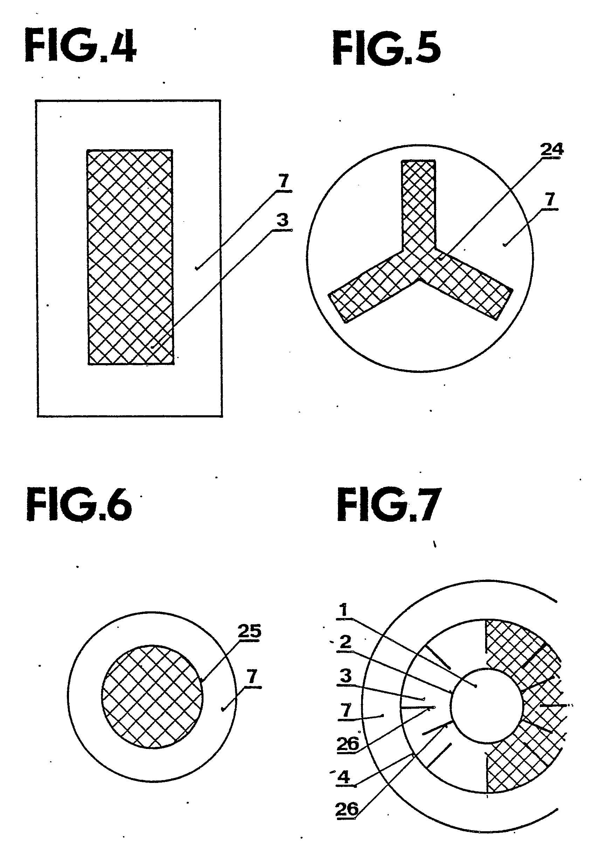

Einige Beispiele derartiger Anordnungen sind in Figuren 3 bis 6 schematisch dargestellt.

Fig. 3 zeigt den Arbeitsraum 3, inneren Flüssigkeitsraum 1 und äusseren Flüssigkeitsraum 7 mit rechteckigem Querschnitt. Der Arbeitsraum 3 ist, ähnlich wie bei der Ausführung gemäss Fig. 1 und 2, mit der erfindungsmässigen mehrschichtigen Füllung versehen.

Fig. 4 zeigt ein anderes Beispiel, bei dem der innere Flüssigkeitsraum nicht vorhanden ist, da die Breite des Arbeitsraumes 3 so bemessen ist, dass bei der in Frage kommenden Leistung des Kessels die im äusseren Flüssigkeitsraum 7 vorhandene Flüssigkeit zur Kühlung der mehrschichtigen Füllung genügt.

Fig. 5 veranschaulicht eine weitere Querschnittform des Arbeitsraumes, der die Gestalt eines Sternes 24 aufweist, dessen Schenkel durch zu einander parallele Wände gebildet sind. Es ist selbstverständlich, dass die Anzahl der den Stern 24 bildenden Schenkel beliebig gewählt werden kann.

Fig. 6 zeigt einen zur Aufnahme der erfindungsmässigen mehrschichtigen Füllung bestimmten Arbeitsraum, der durch ein Rohr 25 gebildet wird. Je nach geforderter Leistung des Kessels können mehrere Rohre 25 verwendet werden.

Fig. 7 stellt im Querschnitt eine abgeänderte Ausführung des die untere Schicht 6 enthaltenden Unterteiles des Strahlungskessels dar. Sowohl die den Arbeitsraum 3 begrenzende innere Wand 2 als auch die mittlere Wand 4 sind mit in den Arbeitsraum 3 ragenden Rippen 26 versehen. Die in der unteren Schicht 6 herrschende Temperatur ist bereits so niedrig, dass ein Abbrennen der Rippen nicht stattfindet.

Der Kessel ist mit den üblichen Steuerorganen, Sicherheits- und Signalisier-Vorrichtungen versehen und wird in üblicher Weise an die Gas- und Wasserleitung sowie an das Heizsystem oder einen anderen Verbraucher angeschlossen.

**Ansprüche**

1. Strahlungskessel zur Erwärmung von Flüssigkeiten durch Verbrennung eines homogenisierten Gas-Luftgemisches teilweise in einem freien Raum des Kessels und teilweise durch nicht-katalytische flammenlose Oberflächenverbrennung an einer Vielzahl von keramischen Körpern einer im Arbeitsraum des Strahlungskessels gelagerten aktiven Füllung zur Umwandlung der Wärmeenergie des brennenden Gemisches in Wärmestrahlungsenergie, wobei das homogenisierte Brenngemisch von oben in den Kessel durch einen Gemischverteiler zugeführt wird, dadurch gekennzeichnet, dass die im Arbeitsraum /3/ des Strahlungskessels untergebrachte aktive Füllung in mindestens zwei Schichten /5, 6/ unterteilt ist, von denen nur die obere Schicht /5/ die zur flammenlosen Verbrennung des Gemisches bestimmte Vielzahl von keramischen Körpern enthält, während die untere Schicht /6/ durch eine Vielzahl von Körpern eines Materials von hoher Wärmeleitfähigkeit, insb. Metallkörper gebildet wird.

2. Strahlungskessel nach Anspruch 1, dadurch gekennzeichnet, dass der Kessel einen inneren achsialen Flüssigkeitsraum /1/ für die zu erwärmende Flüssigkeit besitzt, der von einem durch parallele Wände /2,4/ begrenzten Arbeitsraum /3/ umgeben ist, der die mehrschichtige aktive Füllung /5,6/ enthält, zwischen welcher und dem Gemischverteiler /14/ sich ein leerer Raum /23/ für das freie Brennen des Brenngemisches vor seinem Eintritt in den Oberteil der mehrschichtigen aktiven Füllung /5,6/ befindet und dieser Arbeitsraum /3/ ist von einem äusseren Flüssigkeitsraum /7/ für die zu erwärmende Flüssigkeit umgeben, wobei beide Flüssigkeitsräume /1,7/ zueinander parallel geschaltet sind.

3. Strahlungskessel nach Anspruch 2, dadurch gekennzeichnet, dass der Gemischverteiler /14/ gegenüber einer vollen oberen gekühlten Wand /17/ des inneren Flüssigkeitsraumes /1/ liegt und an seiner Stirn mit einer vollen Wand /16/ verschlossen ist.

4. Strahlungskessel nach Anspruch 2, dadurch gekennzeichnet, dass der Eintrittskanal /10/ beiden Flüssigkeitsräumen /1,7/ gemeinsam und mit seitwärts gerichteten Austrittsöffnungen /13/ versehen ist, deren Querschnitte im inneren Flüssigkeitsraum /1/ und äusseren Flüssigkeitsraum /7/ so bemessen sind, dass die Temperaturen der aus diesen Flüssigkeitsräumen /1,7/ austretenden Flüssigkeit dieselben sind.

5. Strahlungskessel nach Anspruch 2, dadurch gekennzeichnet, das sowohl der innere Flüssigkeitsraum /1/ als auch der äussere Flüssigkeitsraum /7/ mit einem eigenen Eintrittskanal und Austrittskanal versehen sind.

6. Strahlungskessel nach Anspruch 1, dadurch gekennzeichnet, dass zwischen der oberen Schicht /5/ und der unteren Schicht /6/ der aktiven Füllung mindestens eine Zwischenschicht eines Materials von hoher Wärmewiderstandsfähigkeit und gleichzeitig hoher Wärmeleitfähigkeit, z.B. Metallkeramik, eingelegt ist.

7. Strahlungskessel nach Anspruch 2, dadurch gekennzeichnet, dass die Flüssigkeitsräume /1,7/ und der zur Aufnahme der mehrschichtigen aktiven Füllung bestimmte Arbeitsraum /3/ einen ringförmigen Querschnitt aufweisen.

8. Strahlungskessel nach Anspruch 1, dadurch gekennzeichnet, dass der zur Aufnahme der mehrschichtigen aktiven Füllung /5,6/ bestimmte Arbeitsraum /3/ einen rechtwinkligen Querschnitt aufweist und sowohl einen inneren als auch einen äusseren Flüssigkeitsraum /1,7/ besitzt.

9. Strahlungskessel nach Anspruch 1, dadurch gekennzeichnet, das der zur Aufnahme der mehrschichtigen aktiven Füllung /5,6/ bestimmte Arbeitsraum /3/ einen rechtwinkligen Querschnitt aufweist und von einem Flüssigkeitsraum /7/ umgeben ist.

10. Strahlungskessel nach Anspruch 1, dadurch gekennzeichnet, dass der zur Aufnahme der mehrschichtigen aktiven Füllung /5,6/ bestimmte Arbeitsraum /3/ den Querschnitt eines Sternes /24/ aufweist, dessen Arme durch zueinander parallel Wände begrenzt sind.

11. Strahlungskessel nach Anspruch 1, dadurch gekennzeichnet, dass der zur Aufnahme der mehrschichtigen aktiven Füllung /5,6/ bestimmte Arbeitsraum /3/ durch mindestens ein Rohr /26/ gebildet ist, das von einem Flüssigkeitsraum /7/ umgeben ist.

12. Strahlungskessel nach Anspruch 1 bis 11, dadurch gekennzeichnet, dass im Bereich der unteren Schicht /6/ der mehrschichtigen aktiven Füllung /5,6/ die Wände des Arbeitsraumes /3/ mit Rippen /25/ versehen sind.

FIG.1

# FIG. 2

# FIG. 3

# FIG.4

# FIG.5

# FIG.6

# FIG.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 332 494 (STAV PRAHA VYROBNI STAVEBNI DRUZSTVO STREDISKO MONTA) * Insgesamt * | 1 | F 24 H 9/00 |
| A | | 2 | |
| A | GB-A-2 053 428 (MITCHELL) * Zusammenfassung * | 1 | |
| A | GB-A- 398 494 (PATTISON) * Figuren * | 1 | |
| A | GB-A-1 401 286 (THE PLESSEY CO., LTD) * Anspruch 1; Figuren * | 1 | |
| A | DE-A-3 205 309 (LAUDE) * Insgesamt * | 1 | |
| A | US-A-3 848 661 (PALM) * Figuren 2,3 * | 4 | |

|  |
|---|
| **RECHERCHIERTE SACHGEBIETE (Int. Cl.4)** |
| F 24 H F 24 F |

Der vorliegende Recherchenbericht wurde für alle Patentansprüche erstellt

| Recherchenort | Abschlußdatum der Recherche | Prüfer |
|---|---|---|
| DEN HAAG | 14-02-1989 | VAN GESTEL H.M. |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes
Dokument